Europäisches Patentamt

European Patent Office

Office européen des brevets

(11) Publication number: 0 368 602 A2

## EUROPEAN PATENT APPLICATION

(21) Application number: 89311492.6

(51) Int. Cl.5: A21D 13/00

(22) Date of filing: 07.11.89

(30) Priority: 07.11.88 GB 8825998
07.11.88 GB 8825999
07.11.88 GB 8826000

(43) Date of publication of application:
16.05.90 Bulletin 90/20

(84) Designated Contracting States:
AT BE CH DE ES FR GB GR IT LI LU NL SE

(71) Applicant: UNITED BISCUITS (UK) LIMITED
12 Hope Street
Edinburgh Scotland(GB)

(72) Inventor: Wilkes, Malcolm Stuart
Thornbury Cottage The Cricket Common
Cookham Dean Berkshire SL6 9NZ(GB)
Inventor: Evans, Garfield George
"Chy-Munys" Little Wittenham Road
North Moreton Oxfordshire OX11 9AX(GB)
Inventor: Keers, Clare Angelica
6 Greenlands Court Blenheim Road
Maidenhead Berkshire SL6 5HH(GB)
Inventor: Kaur, Parvinder
38 Cumberland Close
Little Chalfont Buckinghamshire(GB)
Inventor: Gordon, Kay Helen
11 Gorselands Emmer Green
Reading Berkshire RG4 8QZ(GB)

(74) Representative: Ackroyd, Robert et al
Pollak, Mercer & Tench Eastcheap House
Central Approach
Letchworth Hertfordshire SG6 3DS(GB)

(54) Food product manufacture.

(57) A sweet or savoury filling for a sandwich or pastry is based on an oil/fat-in-water emulsion containing at least one emulsifying protein, salt and whey powder. The inclusion of both salt and whey powder has been found to lead to the desirable properties of a moist mouthfeel and sufficiently-low water content for a baked product containing the filling to be shelf-stable for an extended period at ambient temperature. By the use of a combination of two emulsifying proteins (sodium caseinate and soya protein isolate) a filling is obtained which is stable to the baking step but which undergoes controlled breakdown upon re-heating and provides further desirable mouthfeel characteristics.

FIG.1.

Xerox Copy Centre

# FOOD PRODUCT MANUFACTURE

This invention relates to fillings for food products and to filled food products. Such products may take the form of, for example, sandwiches or pasties and may be savoury or sweet. It is highly desirable that such products should have a moist mouthfeel on being eaten, but this is very difficult to achieve, especially when attempts are also made to give such products reduced moisture contents. One important reason for attempting to manufacture such products with lower moisture contents is that lower water activities result and the products are thus better able to withstand microbial spoilage. It is a purpose of this invention to produce filled food products and high-quality fillings for inclusion in such products which have the desirable properties mentioned and which also have water activities low enough that micro-organisms such as Clostridium botulinum will not grow and spores will not germinate. Products which meet these criteria would have a long shelf-life under ambient temperature storage conditions.

It has now been discovered that this aim can be achieved, by formulating fillings in a particular but simple manner. It is common practice to formulate a sandwich filling as an oil-in-water emulsion. One common form of sandwich emulsion is based upon mayonnaise. Also, oil, water and an emulsifying protein, e.g. sodium caseinate, are used to form comminuted meat mixes such as sausage. The principal objective in these meat systems is to combine water and fat together with meat protein to form a stable matrix.

Our discovery is the finding found that an oil-in-water or fat-in-water emulsion can form the basis of a food product filling, for example a sandwich or savoury pie or pasty filling, in which the water activity can be reduced to meet the microbiological constraints, whilst still maintaining a moist mouthfeel and at least partial emulsion stability on re-heating, for example by microwave energy, after an initial cooking step.

One material which has been used to reduce water activity in this context is common salt, while another such material is whey powder.

The invention is based upon the unexpected discovery that the inclusion of both salt and whey powder in an oil/fat-in-water emulsion causes the formulation to have a reduced water activity and that compositions in the form of such an emulsion, containing oil/fat, water, at least one emulsifying protein, salt and whey powder, together with desired flavouring and other ingredients, can have the desired combination of properties, previously thought to be very difficult or virtually impossible to achieve.

The other ingredients can be, for example, meats and meat products, vegetables and flavourings. By appropriate selection of these other ingredients, sweet fillings can be produced. The filling, or a filled food product containing the filling will normally be subjected to a pasteurisation step, in order to kill vegetative organisms and produce a shelf-stable product. When such a product is re-heated, as would be done in preparing a toasted savoury sandwich, for instance, it has surprisingly been found that the filling retains its desirable moist and succulent mouthfeel.

The present invention thus provides a filling for a food product, the filling comprising, in addition to flavouring and/or other food materials, an emulsion of oil and/or fat in water which also contains at least one emulsifying protein, common salt, or a substitute therefor, and whey powder.

The pH of the filling is preferably in the range 4.0 to 6.0 and is highly desirably no higher than 5.2. If necessary, the pH of the filling can be lowered by the addition of an acidic substance, for example lactic acid. Whether or not such addition is necessary will depend largely upon the acidity of the other food materials present in the filling.

All pH values contained in this specification and its claims are as obtained by the following procedure:

The food product to be tested is homogenised, for example by grinding, mincing or maceration. 10g of the homogenised sample is mixed with $10 cm^3$ of fresh, de-ionised, double-distilled water to form a slurry, into which the top of a pH electrode is promptly inserted to depth at which it is covered by the slurry. When stable, the pH reading is taken.

The water activity of the filling is preferably less than 0.95, with values as low as 0.70 being possible. Water activities in the range 0.90 to 0.94, optimally around 0.92, are however most preferred.

These and all other water activity values used in this specification and its claims are as obtained according to the following method:

A well-mixed sample of the food product to be tested is placed in a sample pot which is then placed in the sensor chamber of a Novasina TH2 water activity meter. Sample reading are taken at 15 min intervals, until two consecutive readings agree.

Examples of suitable emulsifying proteins are sodium caseinate and soya protein isolate. The weight ratio of the total amount of emulsifying protein to the emulsified oil and/or fat and water is preferably in the range 1:4 to 1:36, preferably 1:8 to 1:20, more preferably 1:10 to 1:14 and most preferably about 1:12.

The salt contained in the filling may be common salt (i.e. sodium chloride), or any other substitute therefor which is acceptable in a food product and which has appropriate humectant properties. One example of such substitutes is potassium chloride and.

The amount of salt used is preferably from 0.1 to 5.0% by weight of the filling, more preferably 0.3 to 2.0%. Depending upon the nature of the flavouring and/or other food materials contained in the filling, the salt may be added as such, or may be provided by the salt content of the flavourings or other food materials of the filling.

The whey powder used is an edible whey powder, for example one containing at least 68% by weight lactose. Such whey powders may themselves contain some salt, for example 4% by weight, and any such salt is to be regarded as contributing to the salt content of the filling. The amount of whey powder (discounting any salt content) used is preferably 0.1 to 10.0% by weight of the filling, more preferably 3.5 to 7.5% by weight.

It is preferred that the total amount of salt and whey powder in the filling does not exceed 10% by weight of the filling.

In particularly preferred fillings according to the invention, a combination of two emulsifying proteins is used. By appropriate selection of the proteins and their relative amounts, it has been found possible to produce an emulsified system which is stable to a first heating step, for example a baking and pasteurisation step carried out on the filled food product prior to sale to the consumer, but which undergoes a controlled breakdown during a second, subsequent heating step, for example a toasting or microwave reheating step carried out by the consumer, to produce an excellent mouthfeel in the product when eaten.

Advantageously, the two emulsifying proteins used in combination are sodium caseinate and soy protein isolate. When a single protein is employed, one or the other of these is advantageously used.

When there are two proteins, the weight ratio of the first (for example, sodium caseinate) to the second (for example, soya protein isolate) is preferably in the range 25:1 to 1:25, more preferably 10:1 to 1:10 and most preferably 1.0:1 to 1.8:1, or, better, 1.2:1 to 1.6:1 or around 1.4:1.

Fillings according to the invention preferably contain from 30 to 70% by weight, more preferably 40 to 50% by weight, of oil and/or fat, water, emulsifying protein, salt and whey powder, with the balance provided by the flavouring and/or other food materials present.

In order to destroy any vegetative organisms present in the filling, the filling should be subjected to a pasteurisation, but not a sterilisation, step. This is most conveniently achieved by heating to at least 70°C, more conveniently 70 to 90°C for an appropriate time period, for example 30 to 60 min. Higher temperatures can be used, which allow for the use of correspondingly shorter time periods.

Conveniently, the heating is carried out after the filling has been introduced into an unbaked food product which is subsequently heated to effect baking and the destruction of vegetative organisms. This may be achieved by heating the product in a hot-air oven set at, for example 220°C, for about 35 min when the desired internal product temperature of 70 to 90°C is achieved for sufficient time.

The food product containing the filling of the invention can be any of a wide range which includes pastry- and dough-based products, for example bread, cake, biscuits and any type of pastry. It is desirable that the water activity and pH of the dough should correspond reasonably closely to those of the filling. For this reason, acidic ingredients are often desirable, for example yoghurt powder rather than milk powder.

Fillings according to the invention are conveniently prepared by first combining the emulsifying protein or proteins with the water and then adding the oil or fat (melted if necessary) in a high-shear mixer, for example a bowl chopper. The shearing action of the mixer assists in dispersing the oil or fat into small even-sized globules, the emulsifying protein preventing coalescence of the globules. Once a stable emulsion has been formed the whey powder and any added salt are added, followed by the flavouring and/or other materials, including any acidifying agents required.

The invention will now be described further with reference to the following examples.

EXAMPLE 1 Preparation of a bacon and tomato filling

The following ingredients were used to prepare 15kg of filling:

EP 0 368 602 A2

| Flavourings, etc . | Weight | % |
|---|---|---|
| Chopped Cooked Bacon | 4567 | 30.45 |
| Tomato Puree (double conc$^n$) | 3510 | 23.40 |
| Dried Onion Pieces SDO 139 | 345 | 2.30 |
| Worcester Sauce | 69 | 0.46 |
| Paprika | 14 | 0.09 |
| Garlic Powder | 27 | 0.18 |
| Ground Bay | 6 | 0.04 |
| Black Pepper | 11 | 0.07 |
| Oregano | 1 | 0.07 |
| Mixed Herbs | 11 | 0.07 |
| Soya / Caseinate Emulsion | 6373 | 42.47 |
| Emulsion | | |
| Water | 1950 | 13.00 |
| Soya Protein Isolate | 177 | 1.18 |
| Caseinate EM375 | 240 | 1.60 |
| Oil | 2438 | 16.25 |
| Water | 488 | 3.25 |
| Lactic Acid | 56 | 0.37 |
| Edible Whey | 530 | 3.53 |
| Salt | 80 | 0.53 |
| Sugar | 414 | 2.76 |

The ingredients were processed as follows in a bowl chopper:

| | | Sequence | Time of Addition |
|---|---|---|---|
| | | | No. of Revolutions |
| 1. | | Preparation of soya/caseinate emulsion in bowl chopper. Soya/caseinate/water (80%) | 30 fast |
| | | Oil | 45 fast |
| | | Water (20%) and Lactic Acid | 10 slow |
| | | Salt and Sugar | 2 slow |
| | | Edible Whey | 10 slow |
| 2. | | Transfer emulsion to paddle mixer and add the following ingredients :- | |
| | | Dry ingredients | |
| | | - Paprika Bay<br>Garlic Powder<br>Black Pepper<br>Mixed Herbs<br>Oregano | 1 minute mixing |
| | | Wet ingredients | |
| | | - Tomato Puree<br>- Worcester Sauce | 1 minute mixing |
| | | Dried Onion Pieces<br>Bacon | 2 minute mixing |

4

EXAMPLE 2 - Preparation of a cheese and bacon filling

The following ingredients were used to prepare 15kg of filling:

| Flavourings etc . | Weight | % |
|---|---|---|
| Chopped Cooked Bacon | 2579 | 17.19 |
| Cheese Coat 'n' Sauce | 825 | 5.50 |
| Dried Onion Pieces SDO 139 | 104 | 0.69 |
| Black Pepper | 21 | 0.14 |
| Dried Mustard | 21 | 0.14 |
| Grated Cheddar Cheese | 825 | 5.50 |
| Emulsion | 10615 | 70.76 |
| Emulsion | | |
| Water | 3324 | 22.16 |
| Caseinate EM375 | 833 | 5.55 |
| Oil | 4155 | 27.70 |
| Xanthan Gum | 18 | 0.12 |
| Water | 831 | 5.54 |
| Lactic Acid | 54 | 0.36 |
| Edible Whey | 1091 | 7.27 |
| Sugar | 209 | 2.06 |

The ingredients were processed in a bowl chopper:

| | | Sequence | Time of Addition |
|---|---|---|---|
| | | | No. of Revolutions |
| 1. | | Preparation of caseinate emulsion in bowl chopper | |
| | | Caseinate/water (80%) | 40 fast |
| | | Oil/Gum | 100 fast |
| | | Lactic Acid/Water (20%) | 10 slow |
| | | Sugar | 10 slow |
| | | Edible Whey | 10 slow |
| 2. | | Transfer emulsion to paddle mixer and add the following ingredients: Dry ingredients | |
| | | - Cheese Coat 'n' Sauce | 1 |
| | | Onion Pieces | minute |
| | | Black Pepper | mixing |
| | | Grated Cheddar Cheese | |
| | | Bacon | 1 minute mixing |

EXAMPLE 3 - Preparation of a mild curry filling

The following ingredients were used to prepare 15kg of filling:

| Flavourings etc . | Weight | % |
|---|---|---|
| Cooked Chicken (21mm dice) | 6526 | 22.19 |
| Tika Tumble Mix | 3264 | 21.76 |
| Sultanas | 522 | 3.48 |
| Coconut Slices | 131 | 0.87 |
| Dried Onion SDO 139 | 65 | 0.43 |
| Chicken Flavour Glaze | 653 | 4.35 |
| Apple Pieces (10 x 10mm) | 315 | 2.10 |
| Emulsion | 6721 | 44.80 |
| Emulsion | | |
| Water | 2088 | 13.92 |
| Caseinate EM375 | 522 | 3.48 |
| Oil | 2610 | 17.40 |
| Xanthan Gum | 12 | 0.08 |
| Water | 522 | 3.48 |
| Lactic Acid | 35 | 0.23 |
| Edible Whey | 684 | 4.56 |
| Salt | 53 | 0.35 |
| Sugar | 195 | 1.30 |

The ingredients were processed in a bowl chopper:

| Sequence | | Time of Addition |
|---|---|---|
| | | No. of Revolutions |
| 1. | Preparation of caseinate emulsion in bowl chopper. | |
| | Caseinate/Water (80%) | 20 fast |
| | Oil | 100 fast |
| | Lactic Acid/Water (20%) | 5 slow |
| | Salt and Sugar | 5 fast |
| | Edible Whey | 12 slow |
| 2. | Addition of dry ingredients: | |
| | Chicken Flavour Glaze | 10 slow |
| 3. | Addition of wet ingredients: | |
| | Tika Tumble Mix | 10 slow |
| 4. | Addition of Sultanas, distributed evenly around the bowl chopper | 1 revolution slow |
| 5. | Transfer the mix to the paddle mixer. Add all particulates: | |
| | Coconut Slices | Approx. |
| | Dried Onion Pieces | 2 |
| | Apple Pieces | minutes |
| | Cooked Chicken | mixing |

EXAMPLE 4 Preparation of a spicy oriental chicken filling.

The following ingredients were used to prepare 15kg of filling:

| Flavourings | Weight | % |
|---|---|---|
| Cooked Chicken (21mm dice) | 4299 | 28.66 |
| Hoi Sin Sauce | 1310 | 8.73 |
| Dried Onion Pieces SDO 139 | 399 | 2.66 |
| Ground Ginger | 42 | 0.28 |
| Tomato Puree | 846 | 5.64 |
| Pineapple Chunks | 651 | 4.34 |
| Soya Sauce | 83 | 0.55 |
| Garlic Puree | 24 | 0.16 |
| Chinese Flavour Glaze | 899 | 5.99 |
| Soya/Caseinate Emulsion | 6447 | 42.98 |
| **Emulsion** | | |
| Water | 2080.8 | 13.27 |
| Soya Protein Isolate | 188 | 1.25 |
| Caseinate EM375 | 255 | 1.70 |
| Oil | 2601 | 17.34 |
| Water | 520.2 | 3.47 |
| Lactic Acid | 12 | 0.08 |
| Edible Whey | 563 | 3.76 |
| Salt | 227 | 1.51 |

The ingredients were processed as follows in a bowl chopper:

| | Sequence | Time of Addition |
|---|---|---|
| | | No. of Revolutions |
| 1. | Preparation of emulsion on the bowl chopper: Caseinate/Soya and Water (80%) | 35 fast |
| | Oil | 40 fast |
| | Water (20%) and Lactic Acid | 8 slow |
| | Salt | 4 slow |
| | Edible Whey | 8 slow |
| 2. | Addition of dry ingredients : | |
| | Ground Ginger | 12 slow |
| 3. | Addition of wet ingredients: | |
| | Hoi Sin Sauce | 12 slow |
| | Garlic Puree | |
| | Tomato Puree | |
| | Soya Sauce | |
| 4. | Transfer the mix to the paddle mixer Add particulates: | |
| | Dried Onion Pieces | Approx. 2 minutes |
| | Pineapple Chunks | |
| | Chinese Flavour Glaze | |
| | Cooked Chopped Chicken | mixing time |

7

EXAMPLE 5 - Preparation of a tandoori chicken filling.

The following ingredients were used to prepare 15kg of filling:

| Flavourings | Weight | % |
|---|---|---|
| Cooked Chicken (21mm dice) | 3627 | 24.18 |
| Dried Onion SDO 139 | 381 | 2.54 |
| Sesame Seeds (creamed) | 543 | 3.62 |
| Tandoori Spice Mix DE 9048 | 191 | 1.27 |
| Tandoori Spice Mix DES 87245 | 191 | 1.27 |
| Tomato Puree | 1508 | 10.05 |
| Paprika | 6 | 0.04 |
| Garlic Puree | 6 | 0.04 |
| Black Pepper | 6 | 0.04 |
| Emulsion | 8545 | 56.96 |
| Emulsion | | |
| Water | 2636.8 | 17.58 |
| Soya Protein Isolate | 240 | 1.60 |
| Caseinate EM375 | 326 | 2.17 |
| Oil | 3296 | 21.97 |
| Salt | 215 | 1.43 |
| Glucose (Dextrose Monohydrate) | 422 | 2.81 |
| Edible Whey | 715 | 4.77 |
| Lactic Acid | 35 | 0.24 |
| Water | 659.2 | 4.39 |

The ingredients were processed in a bowl chopper:

| | Sequence | Time of Addition |
|---|---|---|
| | | No. of Revolutions |
| 1. | Preparation of emulsion in bowl chopper: | |
| | Caseinate/Soya and Water (80%) | 40 fast |
| | Oil | 25 fast |
| | Lactic Acid and Water (20%) | 15 slow |
| | Salt and Glucose | 10 slow |
| | Krafen | 10 slow |
| 2. | Addition of dry ingredients: | |
| | Paprika | 10 |
| | Black pepper | slow |
| 3. | Addition of Tomato Puree and Garlic Puree | 20 slow |
| 4. | Transfer the mix to the paddle and add all particulates: | |
| | Sesame Seeds | Approx. 2 |
| | Onion Pieces | minutes |
| | Tandoori Spice Mixes | mixing time |
| | Chicken | to allow even distribution |

Flaky pastry was prepared from the following ingredients:

|  | Weight | % |
|---|---|---|
| Bowmans No. 1 Flour | 1138.0 | 59.64 |
| Pastry Fat (Flex) | 132.0 | 6.92 |
| Salt | 10.0 | 0.53 |
| Yoghurt Powder (Full Strength) | 76.0 | 3.98 |
| Water | 436.0 | 22.85 |
| Liquid Egg | 116.0 | 6.08 |
| Laminating Fat - |  |  |
| Flex at 20% of total recipe weight - 399g. | | |

After rolling to a thickness of about 2 to 3 mm, the dough was cut into "bases" measuring 12.5 x 8.5cm and "lids" measuring 16.0 x 10.5cm. The bases were then glazed using a mixture of equal weights of full fat whole milk and whole liquid egg. Two 40g portions of the filling prepared in Examples 1 to 5 were then placed on the bases in two regions. The tops were then added and the tops and bottoms sealed around the edges and between the filling portions. The edges were trimmed, the lids then glazed and the products baked in a three-zone oven set at 220, 220 and 240°C, for a total of 35 minutes.

This invention also relates to the packaging of food products and, more particularly, is concerned both with methods for the manufacture of packages which contain food products and also with desirable features and properties of the resultant packages.

An important purpose of the invention is to provide methods for packaging food products so that the packages with their contents can be stored at room temperature. If this purpose can be achieved, the packaged food products do not need to be stored under reduced temperature conditions, thus avoiding the capital and running costs of both chill cabinets and deep freeze units, for instance. Another important purpose of the invention is to provide methods for packaging food products so that the packages with their contents can be stored satisfactorily over long periods, i.e. at room temperature, and, when required for consumption, the food products can be easily and simply heated or otherwise treated, in order to make them ready for use. This heating or other preparation stage is desirably carried out whilst the food products are still contained in the packages, if required after removal or displacement of one or more of the components of the packages. Yet a further important purpose of the invention is to provide methods for packaging food products so that the packages with their contents, when heated or otherwise treated in order to make the food products ready for use as just mentioned, are of a very high eating quality and avoid most or all of the defects which are commonly found with food products which have been stored for long periods and then heated or otherwise treated to become ready for consumption.

Many attempts have been made, with varying degrees of success, to package food products so that they are suitable for room temperature storage, have a long shelf-life and can be made ready for consumption in an easy and simple manner so as to simulate , as far as possible, a high quality fresh product which has just been made and prepared for consumption. For instance, prior attempts include the manufacture of sterilised bakery goods which are packaged in sealed cans. However this packaging process does not allow products to be made which have a crust or a baked colour, when the products are prepared for consumption. One reason for this is that the products completely fill the cans, so that there is no atmosphere in contact with the food product contents. Heat energy is transferred by conduction in a high humidity environment, which does not allow a crust or a natural baked colour and texture to be formed. One way in which these difficulties could be overcome would be to use, as a component of a package for a food product, a paper which has a controlled porosity. This kind of paper is commonly used in the pharmaceutical industry, for packaging surgical and dental instruments, because these need to be heat-sterilised in their packages, before the latter are opened to allow the instruments to be used.

A food container can be envisaged, such as a tray, in which a food product is located. The container with its contents can be sealed with a web of a controlled porosity paper, or a plastics material with equivalent properties, using a heat seal where the periphery of the container is contacted by the periphery of the paper sheet. When heat sealing is effected in order to attach the paper to the container, the sealing medium located around the rim of the tray is rendered liquid and seeps or "wicks" into the paper, thus forming a seal as it cools and resets. By selecting a heat-resistant plastics material, such as a polyester, as the element of controlled porosity, the resultant package containing the food product is capable of being processed by passage through an oven. By enclosing a food item such as a baked food product in a tray-like container incorporating a paper or plastics element of controlled porosity, a long shelf-life for the packaged product can be obtained, because the baking step in the oven kills the vegetative micro-organisms associated with the product, whilst facilitating the escape of steam released from the baked products and therefore allowing the development of crust and a baked colour.

The porosity of the paper component can be selected so that it acts as a barrier to micro-organisms, as a result of which degeneration of the food product in the package is virtually eliminated, as the baking step kills the micro-organisms originally associated with it and the porous paper lid sealed to the package stops micro-organisms in the air from contaminating the product as it cools, after being removed from the oven. The paper achieves this result by acting as a microbial filter, which prevents the passage of micro-organisms, without preventing the passage of gas molecules, so that water vapour and air can still pass through the membrane represented by the paper sheet of controlled porosity.

Suitable porous papers and plastics sheets have Bendtsen porosities in the range 200 to 2000 $cm^3$ $min^{-1}$, preferably 200 to 1500 $cm^3$ $min^{-1}$, and more preferably 200 to 1000 $cm^3$ $min^{-1}$, for example about 250 $cm^3$ $min^{-1}$.

One suitable paper is that sold under the name Sterisheet AS/A3 by Wycombe Marsh Paper Mills Limited of High Wycombe, Buckinghamshire, HP11 1ES, England.

Another procedure used in the manufacture of food products, with a view to enabling them to be packaged for storage, particularly dough products which contain fillings, is to ensure that the products are stored under reduced partial pressures of oxygen. The reduced amount of oxygen in contact with the food products slows down the rate at which adverse sensory changes can take place. Also, it is known to use carbon dioxide as the or a component of the atmosphere which is in contact with a packaged food product, as this can provide desirable anti-microbial properties, which can further extend the shelf-life of the packaged products.

Known methods for atmosphere control, including atmosphere replacement, used in the manufacture of packaged food products fall into two main types:

(a) The package is subjected to reduced pressure in a sealable enclosure, e.g. by connecting the latter to a vacuum pump, and then the reduced pressure is returned to normal in the presence of the required gas. This technique is used, for instance, with thermoforming equipment.

(b) The products are packaged under the desired gas atmosphere in a form/fill/seal equipment.

Both of these known techniques have disadvantages. With type (a), there is a marked tendency for the controlled-porosity membrane to tear, when subjected to the sudden pressure changes across it as the pressure reduction and gas flushing steps are carried out; with type (b), a low level of gas transfer is achieved.

It has now been discovered that the gas atmosphere in a sealed package, comprising a container having a controlled-porosity element sealed to it, can be changed readily and that this step can be accomplished in a time sufficiently short to allow food product packaging methods to be devised and carried out industrially which make use of this discovery.

According to an aspect of this invention, a method of manufacture of a package comprising a food product in a container incorporating a controlled-porosity element is provided, wherein, after introduction of the food product into the container, the container is heated to cook the food product within it, the container and cooked food product are subjected to a treating gas in an enclosure for a time at least sufficient to modify the atmosphere adjacent the food product and within the container, and the container is then sealed into a gas-proof envelope so as to maintain the treating gas atmosphere within the package.

The container and cooked food product can be allowed to cool to ambient temperature prior to being subjected to the treating gas. Such cooling can take place in air without any danger of microbial contamination of the food product because entry of micro-organisms is prevented during that period by the controlled-porosity element. Atmospheric gases can however pass into the container during such cooling but are replaced by the treating gas in the subsequent stage of the method.

The treating gas is conveniently carbon dioxide, nitrogen, or a mixture, preferably containing at least 50% carbon dioxide by volume, thereof. Any other inert gas may however be used, in place of or in admixture with one or both gases. Mixtures of carbon dioxide and air, for example 80%/20% by volume, can also be used.

In all cases, the treating gas should contain not more than 5.0% oxygen by volume, preferably not more than 2.5% by volume and most preferably not more than 0.3% by volume..

The treating gas is preferably at substantially atmospheric pressure. Typical flow rates of gas through the treatment zone fall in the range 40 to 300 $dm^3$ $min^{-1}$, for example 80 $dm^3$ $min^{-1}$. Sufficient replacement of oxygen within the container can be accomplished in a period of, typically, 1 minute. Longer time periods can however be used when desired, in accordance with the characteristics of the controlled-porosity element.

10

Conveniently, the sealing of the packing into the gas-proof envelope is carried out in a form/fill/seal machine, the gas-proof envelope being conveniently a plastics film.

Preferably, in carrying out the invention, the contents of the container are a filled dough product, which is placed in a tray forming the container, after which the controlled-porosity element such as paper acting as a molecular sieve is sealed to the periphery of the tray. Also, it is preferable for the heating step to be carried out by baking the package in an oven. For instance, the package or, in practice, a supply of packages is passed into a baking oven on a band, so that each package is heated to the desired temperature for the desired time as it proceeds through the oven. The band desirably passes from the oven directly to a tunnel or other enclosed zone, in which the replacement atmosphere is located. This zone operates as a gas quenching region, i.e. a region in which gas transfer by diffusion from a gas atmosphere in which the product is placed is allowed. The method is desirably conducted so that the heated packages pass directly from the oven to the gas tunnel. This can conveniently be made to accommodate a length of the band conveying the packages such that each package is exposed to the replacement gas atmosphere for a length of time sufficient to enable the hot atmosphere around the food product in the package to be exchanged for the desired gas atmosphere, for example, nitrogen, carbon dioxide or a mixture thereof. The invention is founded upon the surprising discovery that a residence or exposure time in the gas atmosphere as short as 60 or 90 seconds, without any imposed change in pressure, can allow the desired change of atmosphere to occur. The packages then pass from the gas exchange zone to a secondary wrapping station, where each is placed in a gas-proof container such as an envelope, in order to preserve the exchanged atmosphere within and around each package. This wrapping station can be a thermoformer or a form/fill/seal machine.

The invention enables the production of crisp coloured baked products in packages, which have a long shelf-life, even when stored at room temperature as intended, and which can be reheated for use, in the package, in an oven, under a grill or in a microwave oven.

The invention will now be described further with reference to the drawing, in which:

Figure 1 is a side view, partly in section of a complete packed food product and,

Figure 2 is a schematic representation of apparatus for cooking and packing the food product.

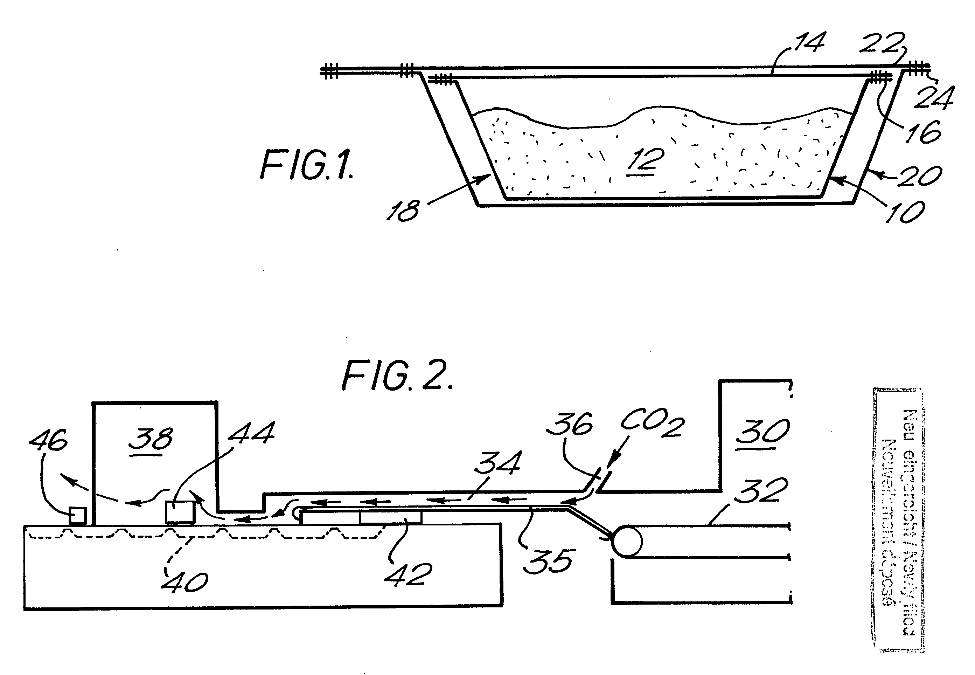

The package shown in Figure 1 consists of an impermeable paper tray 10 containing a food product 12. The tray 10 is closed by a web 14 of controlled-porosity paper which is sealed to the rim 16 of the tray. The sealed tray is contained within a well 18 in packaging tray 20 of impermeable plastics which is closed by an impermeable web 22 of plastics which is heat-sealed to the rim 24 of the tray 20.

Figure 2 schematically shows part of an oven 30 and its baking band 32. The oven is immediately adjacent a gas-treatment zone in the form of a tunnel 34, through which a further band or conveyor belt 35 extends, the return run of the belt and its drive mechanism being omitted for simplicity. The tunnel 34 has an inlet 36 for carbon dioxide. The belt 35 extends into a packaging machine 38. This is also flushed by the treatment gas, which follows the path shown by the arrows and eventually escapes from the packaging machine 38 into the atmosphere. An air-lock (not shown) between the oven 30 and the tunnel 34 prevents flow of flushing gas into the oven.

The packaging machine consists, in known manner, of a forming station 42 in which plastics film from a supply roll (not shown) is formed into the continuous array of packaging trays 40 corresponding to the tray 20 of Figure 1. The trays 40 are conveyed by means not shown to a sealing station 44 where a sealing film of plastics material, corresponding to the web 22 of Figure 1, is applied and heat-sealed, again in a known manner, to the trays 40 which are eventually separated into individual packages by a guillotine 46.

In use of the apparatus shown in Figure 2, food products 12 sealed in trays 10 (as shown in Figure 1) by controlled-porosity paper webs 14 are cooked in the oven 30 and then conveyed on the belt 35 through the tunnel 34, at the end of which they fall into the trays 40 between the forming and sealing stations 42, 44 of the packaging machine 38.

This invention further relates to food products, for example in the form of dough-based goods having fillings, the products being commercially stable and so capable of long-term storage under ambient temperature conditions.

A number of discoveries have been made which enable food products of high-level eating quality to be produced, which also do not allow the growth of micro-organisms. Traditional means for the preservation of food include reduction of the pH of the food products or components of them, e.g. fillings in sandwiches, and also reduction of their water activity. However, these known expedients lead to food products, including sandwiches, which are either sour-tasting or dry- tasting.

It has now been found that food products can be made, which can be preserved for long periods at ambient temperature.

The present invention provides in a first aspect a food product having a pH in the range 4.3 to 5.4 and a water activity of 0.96 or less, the product having been heated or otherwise treated to destroy vegetative organisms and being contained in a gas-impermeable enclosure under an inert atmosphere.

The inert atmosphere can comprise, for example, carbon dioxide or nitrogen, or a mixture thereof. A mixture of carbon dioxide and air, for example, 80%/20% by volume can also be used. In all cases, the inert gas should contain not more than 5.0% oxygen by volume, preferably not more than 2.5% by volume and most preferably not more than 0.3% by volume.

It has been found that the above combination of features leads to products which are shelf-stable without refrigeration and have good eating qualities, particularly moist mouthfeel, even after re-heating, for example by toasting.

The food product preferably has a water activity of 0.92 or less.

The water activity will usually, but not necessarily always, be greater than 0.86.

It has also been found that, when the water activity is as low as 0.92 or lower, it is no longer necessary to keep the food product under an inert atmosphere. The invention accordingly provides in a second aspect a food product having a pH in the range 4.3 to 5.4 and a water activity of 0.92 or less, the product having been heated or otherwise treated to destroy vegetative organisms and being contained in a gas-impermeable enclosure. The enclosure may contain air, an inert atmosphere as mentioned above, or other gas or gases.

The enclosure of either product may contain a further container incorporating a controlled-porosity element, for example of controlled-porosity paper or plastics material. Such a container may take the form of, for example, a tray sealed with a web constituting the controlled-porosity element.

Suitable porous papers and plastics sheets have Bendtsen porosities in the range 200 to 2000 $cm^3$ $min^{-1}$, preferably 200 to 1500 $cm^3$ $min^{-1}$, and more preferably 200 to 1000 $cm^3$ $min^{-1}$, for example about 250 $cm^3$ $min^{-1}$. One suitable paper is that sold under the name Sterisheet AS/A3 by Wycombe Marsh Paper Mills Limited of High Wycombe, Buckinghamshire, HP11 1ES, England.

Vegetative organisms in the food product are preferably destroyed by heating, normally to at least 70°C, more conveniently 70 to 90°C for an appropriate time period, for example 30 to 60 min. Higher temperatures can be used, which allow correspondingly shorter time periods. Such heating should be to effect pasteurisation, but not sterilisation.

All pH values contained in this specification and its claims are as obtained by the following procedure:

The food product to be tested is homogenised, for example by grinding, mincing or maceration. 10g of the homogenised sample is mixed with 10cm³ of fresh, de-ionised, double-distilled water to form a slurry, into which the top of a pH electrode is promptly inserted to depth at which it is covered by the slurry. When stable, the pH reading is taken.

All water activity values contained in this specification and its claims are as obtained by the following procedure:

A well-mixed sample of the food product to be tested is placed in a sample pot which is then placed in the sensor chamber of a Novasina TH2 water activity meter. Sample readings are taken at 15 min intervals, until two consecutive readings agree.

All water activity values given are values at 25°C.

The invention will now be described further with reference to the following experimental results.

15kg batches of cheese and bacon filling for filled pastry food products were made according to the following basic procedure:

| Flavourings | Weight | % |
|---|---|---|
| Chopped Cooked Bacon | 2579 | 17.19 |
| Cheese Coat "n" Sauce | 825 | 5.50 |
| Dried Onion Pieces SDO 139 | 104 | 0.69 |
| Black Pepper | 21 | 0.14 |
| Dried Mustard | 21 | 0.14 |
| Grated Cheddar Cheese | 825 | 5.50 |
| Emulsion | 10615 | 70.76 |
| Emulsion | | |
| Water | 3324 | 22.16 |
| Caseinate EM375 | 833 | 5.55 |
| Oil | 4155 | 27.70 |
| Xanthan Gum | 18 | 0.12 |
| Water | 831 | 5.54 |
| Lactic Acid | 54 | 0.36 |
| Edible Whey | 1091 | 7.27 |
| Sugar | 209 | 2.06 |

The ingredients were processed as follows:

| | Sequence | Time of Addition |
|---|---|---|
| | | No. of Revolutions |
| 1. | Preparation of caseinate emulsion in bowl chopper | |
| | Caseinate-water (80%) | 40 fast |
| | Oil/Gum | 100 fast |
| | Lactic Acid/Water (20%) | 10 slow |
| | Sugar | 10 slow |
| | Edible Whey | 10 slow |
| 2. | Transfer emulsion to paddle mixer and add the following ingredients: | |
| | Dry ingredients - | |
| | Cheese Coat "n" Sauce | 1 |
| | Onion Pieces | minute |
| | Black Pepper | mixing |
| | Grated Cheddar Cheese | |
| | Bacon | 1 minute mixing |

By variation of the amounts chopped cooked bacon (to vary the salt content), sugar and lactic acid in this basic recipe, the water activity and pH of each batch of filling were varied as shown in Table 1.

Flaky pastry was prepared from the following ingredients:

13

|  | Weight | % |
|---|---|---|
| Bowmans No. 1 Flour | 1138.0 | 59.64 |
| Pastry Fat (Flex) | 132.0 | 6.92 |
| Salt | 10.0 | 0.53 |
| Yoghurt Powder (Full Strength) | 76.0 | 3.98 |
| Water | 436.0 | 22.85 |
| Liquid Egg | 116.0 | 6.08 |
| Laminating Fat - |  |  |
| Flex at 20% of total recipe weight - 399g. | | |

After rolling to a thickness of about 2 to 3 mm, the dough was cut into "bases" measuring 12.5 x 8.5cm and "lids" measuring 16.0 x 10.5cm. The bases were then glazed using a mixture of equal weights of full fat whole milk and whole liquid egg. Two 40g portions of each batch of filling, prepared as above, were then placed on the bases in two regions. The tops were then added and the tops and bottoms sealed around the edges and between the filling portions. The edges were trimmed and the lids glazed. Further filled products were likewise prepared for each batch of filling.

The filled products were placed in impermeable paper trays which were then closed by webs of controlled-porosity paper sealed to the rim of the paper tray. The trays were then passed through a three-zone conveyor oven set at 220, 220 and 240°C, for a total of 35 minutes.

The trays containing the baked products were then either passed through a tunnel containing a carbon dioxide atmosphere, in order to replace the atmosphere within the covered tray by an atmosphere of carbon dioxide containing no more than 5.0% oxygen by volume, or were allowed to cool in air, so that the atmosphere covered tray was air. All trays were finally sealed into gas-impermeable envelopes in a form/fill/seal packaging machine. The trays were stored at 25°C and, at appropriate time intervals, trays from each batch were opened and their contents examined microbiologically. By use of standard microbiological test procedures, aerobic and anaerobic bacterial counts were carried out on the food products. Any product showing a bacterial count (either aerobic or anaerobic) of greater than $10000g^{-1}$ was regarded as unstable and not suitable for consumption. Table 1 shows the results obtained

Table 1

| Batch | Water Activity | pH | Week to which stable under | |
|---|---|---|---|---|
|  |  |  | CO$_2$ | Air |
| 1 | 0.94 | 4.78 | 11 | 5 |
| 2 | 0.94 | 4.86 | 12 | 2 |
| 3 | 0.93 | 3.20 | 12 | 2 |
| 4 | 0.93 | 5.06 | 12 | 12 |
| 5 | 0.93 | 5.09 | 12 | 12 |
| 6 | 0.93 | 5.20 | 12 | 2 |
| 7 | 0.92 | 5.00 | 12 | 12 |
| 8 | 0.92 | 5.08 | 12 | 2 |
| 9 | 0.92 | 5.12 | 12 | 12 |
| 10 | 0.92 | 5.15 | 12 | 12 |

These results, and the results of many more tests carried out, have shown that products having a pH in the range 4.3 to 5.4 can have acceptable shelf-stabilities even when kept under air, provided that their water activities are 0.92 or less. When the product is kept under carbon dioxide, water activities up to 0.96 still provide products of acceptable shelf- stability.

Our European Patent Application filed simultaneously hereto and claiming priority from UK Application 8825999.9 dated 7 November 1988 describes a method of manufacture of a package which can contain the food product of this application. Our European Patent Appliction filed simultaneously hereto and claiming priority from UK application 8826000.5 describes food products having particular properties and which can constitute the food product of the package of this application.

## Claims

1. A filling for a food product, the filling comprising, in addition to flavouring and/or other food materials, an emulsion of oil and/or fat in water which also contains at least one emulsifying protein, common salt, or a substitute therefor, and whey powder, the water activity of the filling being 0.95 or less.

2. A filling according to claim 1, having a pH of from 4.0 to 6.0 and/or a water activity of at least 0.70.

3. A filling according to claim 2, having a water activity of from 0.90 to 0.94.

4. A filling according to any preceding claim, in which the weight ratio of emulsifying protein to emulsified oil/fat and water is in the range 1:4 to 1:36, preferably 1:8 to 1:20.

5. A filling according to any preceding claim, containing from 0.1 to 5.0% by weight salt, preferably 0.3 to 2.0% by weight.

6. A filling according to any preceding claim, containing from 0.1 to 10.0% by weight whey powder, preferably 3.5 to 7.5% by weight.

7. A filling according to any preceding claim, containing first and second emulsifying proteins, the proteins being selected such that the emulsion is stable to a first heating step at a temperature of at least 70°C but undergoes partial breakdown when subjected to a second, subsequent heating step.

8. A filling according to any of claims 1 to 6, in which the emulsifying protein comprises sodium caseinate.

9. A filling according to any of claims 1 to 6, in which the emulsifying protein comprises soya protein isolate.

10. A filling according to claim 7, in which the first protein is sodium caseinate and the second protein is soya protein isolate.

11. A filling according to claim 7 or 10, in which the weight ratio of the first protein to the second protein is in the range 1.0:1 to 1.8:1, preferably 1.2:1 to 1.6:1.

12. A filling according to any preceding claim, in which the total weight of oil and/or fat, water, emulsifying protein, salt and whey powder constitutes from 30 to 70% by weight of the filling, preferably 40 to 50% by weight.

13. A filling according to any preceding claim, which has been heated, or otherwise treated, so as to destroy vegetative organisms.

14. A filled food product comprising baked food material and a filling according to claim 13.

15. A method of making a filling according to any of claims 1 to 12, in which the emulsifying protein is dispersed in the water, the oil and/or fat is added to form an emulsion, they whey powder and any added salt are added to the emulsion, followed by the flavouring and/or other materials.

16. A method according to claim 15, including the further steps of introducing the filling to an unbaked food product and heating the filled product to effect baking and destruction of any vegetative organisms present.

17. A method of manufacture of a package comprising a food product in a container incorporating a controlled-porosity element, in which, after introduction of the food product into the container and sealing of the container, the container is heated to cook the food product, the container and cooked food product are subjected to a treating gas in an enclosure for a time at least sufficient to modify the atmosphere adjacent the food product and within the container, and the container is sealed into a gas-proof envelope so as to maintain the treating gas atmosphere within the container.

18. A food product having a pH in the range 4.3 to 5.4 and a water activity of 0.96 or less, the product having been heated or otherwise treated to destroy vegetative organisms and being contained in a gas-impermeable enclosure under an inert atmosphere.

19. A food product having a pH in the range 4.3 to 5.4 and a water activity of 0.92 or less, the product having been heated or otherwise treated to destroy vegetative organisms and being contained in a gas-impermeable enclosure.

# FIG.1.

14  22
24
16
20
10
12
18

# FIG. 2.

46  38  44
36  CO₂
34
30
32
35
40  42

EP 0 368 602 A2

Neu eingereicht / Newly filed
Nouvellement déposé